# EUROPÄISCHE PATENTSCHRIFT

(11) **EP 0 630 935 B1**
(45) Veröffentlichungstag und Bekanntmachung des Hinweises auf die Patenterteilung: **12.06.1996**
(21) Anmeldenummer: 94105546.9
(22) Anmeldetag: 11.04.1994
(51) Int. Cl.: C08J 9/228, B29C 44/44

(54) **Verfahren zur Herstellung vorgeschäumter Polyolefin-Partikel**
Process for preparing pre-expanded polyolefin particles
Procédé pour la préparation de perles de polyoléfine préexpansées

(30) Priorität: 14.06.1993 DE 4319587
(43) Veröffentlichungstag der Anmeldung: 28.12.1994
(73) Patentinhaber: HÜLS AKTIENGESELLSCHAFT, D-45764 Marl (DE)
(72) Erfinder: Träger, Michael, Dr., D-45721 Haltern (DE); Leven, Thomas, Dr., D-58511 Lüdenscheid (DE)

(56) Entgegenhaltungen:
- EP-A- 0 095 109
- EP-A- 0 164 855
- EP-A- 0 564 781
- DE-A- 3 431 245

## Beschreibung

Gegenstand der Erfindung ist ein Verfahren zur Herstellung von Polyolefin-Schaumperlen, die über ihren gesamten Querschnitt eine gleichmäßige Zellengröße aufweisen.

Zur Herstellung von Polyolefin-Schaumperlen mittels Dispersionsschäumung ist eine Reihe von Verfahren bekannt. Beispielsweise wird in der DE-A-21 55 775 eine Dispersion aus Polymerteilchen in einem flüssigen Dispersionsmittel unter Druck wärmebehandelt und unter anschließender Entspannung verschäumt. Die Verschäumung wird dadurch erklärt, daß das Dispersionsmittel Hohlräume des Polymeren infiltriert und beim Ausspritzen in einen Niederdruckraum als Treibmittel wirkt. Zur Erleichterung der Infiltration soll das Polymere 10 bis 70 Gew.-% eines Füllstoffs enthalten. Nach dieser Methode werden Vorschaumperlen mit feiner und gleichmäßiger Zellstruktur erhalten. Wie die Beispiele zeigen, ist jedoch die Expansionsrate ungleichmäßig. In der Praxis hat sich erwiesen, daß eine Verarbeitung dieser Vorschaumperlen zu geschäumten Formkörpern wegen des hohen Füllstoffanteils und des geringen Zellendurchmessers schwierig ist.

Die Verschäumung speziell von Ethylen/Propylen-Randomcopolymeren wird in der EP-A-0 053 333 beschrieben. Dort wird mit einem System gearbeitet, das aus Polymerpartikeln, Wasser als Dispersionsmittel, einem festen Dispersionshilfsmittel sowie einem flüchtigen Treibmittel besteht.

Aus der EP-A-0 071 981 ist bekannt, daß sich Polypropylen-Schaumperlen dann zu dimensionsstabilen Formteilen verschweißen lassen, wenn die Größe der gasgefüllten Zellen innerhalb des Schaumes so eingestellt wird, daß in der Schnittfläche pro mm² nicht mehr als 300 Zellen enthalten sind, wobei das Formteil eine Dichte von 0,026 bis 0,060 g/cm³ aufweist und eine latente Kristallisationswärme von 9 bis 28 cal/g besitzt. Diese Schrift gibt aber keine Anweisung, welche technischen Maßnahmen nötig sind, um diese Zelligkeit zu erhalten.

Weiterhin ist bekannt, daß zur Aufrechterhaltung einer gleichbleibenden Expansionsrate des Schaumes der Ausfahrdruck dadurch konstant gehalten werden muß, daß das infolge des Ausfahrens der Dispersion sich vergrößernde Gasvolumen im Reaktor durch Nachführen inerter Gase ausgeglichen wird. So wird in der EP-A-0 075 897 während des Ausfahrens bei einem Druck gearbeitet, der mindestens das 0,7-fache des Treibmittelpartialdrucks beträgt und bevorzugt größer oder gleich dem Treibmittelpartialdruck ist. Die EP-A-0 095 109 lehrt darüber hinaus, daß zur Erzielung einer gleichmäßigen Zellstruktur und einer gleichbleibenden Expansionsrate nicht nur die Temperatur so genau wie möglich konstant gehalten werden muß, sondern daß auch der Innendruck und der Partialdruck des Treibmittels konstant gehalten werden müssen.

Allerdings wird durch die Nachführung kalter Inertgase oder kalten Treibmittels, das je nach Beschaffenheit durch Wärmeaufnahme im Reaktor verdampfen muß, der Reaktorinhalt unerwünschterweise abgekühlt. Diese Abkühlung wird gemäß der EP-A-0 290 943 dadurch vermieden, daß durch Zufuhr einer Heizflüssigkeit das Flüssigkeitsniveau im Reaktor und damit Druck und Temperatur gleich bleiben. Da erhebliche Mengen an Heizflüssigkeit zugeführt werden müssen, ist dieses Verfahren jedoch mit einem beträchtlichen Energieaufwand verbunden.

Gemäß dem Stand der Technik müssen also erhebliche Anstrengungen unternommen werden, um eine gleichmäßige Zellstruktur der Schaumperlen zu erzielen.

Demgegenüber stellte sich uns die Aufgabe, ein einfaches Verfahren zur Herstellung von Polyolefin-Schaumperlen mit gleichmäßiger Zellstruktur zu entwickeln.

Überraschend erwies es sich, daß diese Aufgabe gelöst wird, wenn beim Ausfahren des Reaktorinhalts, der im wesentlichen aus Polyolefinteilchen, einem flüssigen Dispersionsmittel und ggf. einem flüchtigen Treibmittel besteht, in einen Niederdruckraum der Reaktorinhalt von außen so begast wird, daß durch die Düse ein Dreiphasengemisch aus Dispersionsmittel, Polymerpartikeln und Gas austritt.

In der nicht vorveröffentlichten deutschen Patentanmeldung P 42 11 972.3 vom 09.04.1992 wird ein kontinuierliches Verfahren zur Herstellung von Schaumperlen aus Polymeren beschrieben, das dadurch gekennzeichnet ist, daß Polymerteilchen und ein Dispersionsmittel kontinuierlich einer schlanken, druckbetriebenen, nicht gerührten Stoffaustauschsäule zugeführt und in dieser unter Druck einer Wärmebehandlung ausgesetzt werden, wonach die Dispersion in einen Niederdruckraum ausgespritzt und dabei entspannt wird, wobei die Polymerteilchen expandieren. Hierbei kann in die Stoffaustauschsäule von unten ein Stützgas eingedüst werden.

Der Gegenstand dieser Patentanmeldung wird nicht von der vorliegenden Erfindung umfaßt. Jedoch ist die Erfindung auf alle anderen kontinuierlichen oder diskontinuierlichen Verfahren der Dispersionsschäumung von Polyolefinen anwendbar.

Im folgenden soll die Erfindung am Beispiel des diskontinuierlichen Verfahrens näher erläutert werden.

Als Polyolefine sind beispielsweise Propylenpolymere wie Propylen-Ethylen- oder Propylen-Butylen-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet. Bevorzugt wird ein Ethylen-Propylen-Randomcopolymeres mit 1 bis 15 Gew.-% Ethylen eingesetzt.

Diese Polymeren liegen als diskrete Partikel vor. Sie haben vorzugsweise einen mittleren Teilchendurchmesser von 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch auch Alkohole wie Methanol oder Ethanol.

Um ein Agglomerieren zu verhindern, kann der Mischung von Polymerteilchen und Dispersionsmittel ein feinteiliges Dispergierhilfsmittel und/oder eine oberflächenaktive Verbindung zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Zur Einstellung der Dichte der Schaumperlen ist es zweckmäßig, zusätzlich ein flüchtiges Treibmittel zuzugeben. Geeignete Treibmittel sind aus dem Stand der Technik bekannt; beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetrafluorethan, Trichlortrifluorethan, Dichlormonofluormethan, Methylchlorid, Methylenchlorid oder Ethylchlorid sowie anorganische Gase wie beispielsweise Kohlendioxid oder Stickstoff, jeweils einzeln oder als Mischung, verwendet werden.

Wird kein flüchtiges Treibmittel zugegeben, so wirkt bereits alleine das Dispersionsmittel als Treibmittel. Auf diese Weise werden zwar nur mäßige bis mittlere Expansionsraten erzielt, was aber für viele Anwendungszwekke, z. B. wo ein etwas steiferer Schaum verlangt wird, durchaus erwünscht ist.

Die Mischung wird dann, entsprechend dem Stand der Technik, auf eine Temperatur oberhalb des Erweichungspunktes der ggf. treibmittelhaltigen Polymerpartikel erhitzt. Der technisch sinnvolle Temperaturbereich hängt von der Art und Menge des Treibmittels ab. Im allgemeinen wird ein Temperaturbereich von Tₘ - 25 °C bis Tₘ + 10 °C bevorzugt. Hierbei kann auch eine Temperaturführung vorgenommen werden, wie sie beispielsweise aus der EP-A-0 123 144 bekannt ist.

Wesentlich für die vorliegende Erfindung ist, daß während des anschließenden Ausfahrens des Reaktorinhalts in einen Niederdruckraum der Reaktorinhalt so begast wird, daß durch die Düse ein Dreiphasengemisch aus Dispersionsmittel, Polymerpartikeln und Gas austritt. (Eventuell verwendetes Dispergierhilfsmittel, das eine vierte Phase darstellen würde, ist mengenmäßig vernachlässigbar; auch dieser Fall wird im Rahmen der Erfindung als Dreiphasengemisch angesehen.)

Für den Zweck der Erfindung kann jedes Gas verwendet werden, das sich dem Reaktionsgemisch gegenüber chemisch inert verhält. In erster Linie kommen anorganische oder organische Stoffe in Frage, die unter Normalbedingungen gasförmig sind, wie beispielsweise Stickstoff, CO₂, Luft, Argon, Methan oder Ethan. Jedoch kann auch das verwendete Treibmittel während des Ausfahrvorgangs als Dampf nachdosiert werden. Selbstverständlich können auch Mischungen verschiedener Inertgase sowie Mischungen aus Treibmitteln und Inertgas verwendet werden. In den Fällen, in denen eine exakte Konstanthaltung der Innentemperatur verlangt wird, kann das eingeleitete Gas auch vorgeheizt werden.

Wenn das verwendete Treibmittel für die Begasung benutzt werden soll, so kann dieses bei hinreichender Flüchtigkeit auch in flüssiger Form zudosiert werden, sofern durch die Innentemperatur und den Innendruck sichergestellt ist, daß das zudosierte flüssige Treibmittel an der Eintrittsstelle siedet, wobei die dadurch entstehenden Gasblasen die Begasung der Düse gewährleisten. Auch hier kann das flüssige Treibmittel vor der Zudosierung vorgeheizt werden.

Für die Erfindung ist es wichtig, daß die Gaseinleitung in die Dispersion hinein vorgenommen wird, da nur auf diese Weise ein Dreiphasengemisch in die Düse gelangt. In einer bevorzugten Ausführungsform wird das Gas in der Nähe des Reaktorbodens eingeleitet, besonders bevorzugt unterhalb des Rührers. Auf diese Weise können Gasblasen durch die Strömung leicht zur Düse transportiert werden.

In einer weiteren bevorzugten Ausführungsform wird die Begasung vor der Düse oder in die Düse hinein vorgenommen. Dies ist besonders dann vorteilhaft, wenn sich zwischen Reaktor und Düse eine Rohrstrecke befindet.

Eine weitere bevorzugte Ausführungsform besteht darin, daß das Gas durch den Rührer eingeleitet wird.

Der Durchmesser der Düse sollte derart an den Partikeldurchmesser angepaßt sein, daß möglichst immer nur ein Partikel gleichzeitig durchgelassen wird, da sonst die Gefahr besteht, daß Partikel während des Schäumvorgangs miteinander agglomerieren. Ansonsten kann jede Düsengeometrie des Standes der Technik verwendet werden.

Die geschäumten Polymerpartikel werden anschließend gegebenenfalls gewaschen, um das Dispersionsmittel zu entfernen, und dann auf übliche Weise abgetrennt und getrocknet.

Die geschäumten Polymerpartikel können mit bekannten Methoden zu Formteilen verarbeitet werden. In den dafür verwendeten Maschinen wird der Polymerschaum unter Druck mit Hilfe von Wasserdampf von z. B. 1 bis 5 bar aufgeweicht bzw. angeschmolzen, wobei die einzelnen Schaumpartikel zu einem Formteil verschweißen.

In den folgenden Beispielen wird die Erfindung näher erläutert.

### Beispiel 1:

In einem 5 l-Rührautoklaven wird eine Dispersion aus 2 260 g Wasser und 423 g eines Ethylen-Propylen-Copolymeren mit 3,8 Gew.-% Ethylengehalt bei 130 °C mit 110 g n-Butan 30 Minuten gerührt. Danach wird mittels einer feinporigen Sintermetallkerze unterhalb des Rührers Stickstoff in die Flüssigkeit eingeperlt, wobei der Gasvolumenstrom 50 bis 200 lₙ/min beträgt. Nach Erreichen eines Innendrucks von 25 bar wird der Autoklaveninhalt über eine Düse mit einer Fläche von 28,3 mm² in einen Niederdruckraum ausgespritzt, wobei die Polymerpartikel aufschäumen. Die Ergebnisse sind in der Tabelle 1 wiedergegeben.

### Vergleichsbeispiel 1:

Es wird wie im Beispiel 1 vorgegangen, mit dem alleinigen Unterschied, daß der Stickstoff in den Gasraum des Autoklaven eingeleitet wird. Die Ergebnisse sind in der Tabelle 1 wiedergegeben.

### Beispiel 2:

Wie im Beispiel 1 wird in einem 5 l-Rührautoklaven eine Dispersion aus 2 260 g Wasser und 423 g eines Ethylen-Propylen-Copolymeren mit 3,8 Gew.-% Ethylengehalt bei 130 °C mit 110 g n-Butan 30 Minuten gerührt. Danach wird in die heiße Dispersion 500 g kaltes Wasser (T = 18 °C) gegeben; die Innentemperatur sinkt dadurch auf 120 °C. Unmittelbar anschließend wird mittels einer feinporigen Sintermetallkerze unterhalb des Rührers Stickstoff in die Flüssigkeit eingeperlt, wobei der Gasvolumenstrom 50 bis 200 lₙ/min beträgt. Sofort nach Erreichen eines Innendrucks von 25 bar wird der Autoklaveninhalt über eine Düse mit einer Fläche von 28,3 mm² ausgespritzt. Die Ergebnisse sind in der Tabelle 1 wiedergegeben.

### Vergleichsbeispiel 2:

Es wird wie im Beispiel 2 vorgegangen, mit dem alleinigen Unterschied, daß der Stickstoff in den Gasraum des Autoklaven eingeleitet wird. Die Ergebnisse sind in der Tabelle 1 wiedergegeben.

**Tabelle 1**

| Beispiel | Schaumdichte [g/l] | Zellen pro mm² | Zellstruktur |
|---|---|---|---|
| 1 | 45 | 200 | über den gesamten Querschnitt homogene Zellstruktur |
| Vgl.B. 1 | 43 | 28 - 250 | im Randbereich grobzellig |
| 2 | 95 | 180 | über den gesamten Querschnitt homogene Zellstruktur |
| Vgl.B. 2 | 97 | 4 | im Randbereich faltig geschrumpft |

Der Vergleich des Beispiels 1 mit dem Vergleichsbeispiel 1 zeigt deutlich den Effekt der Begasung.

Der Vergleich des Beispiels 2 mit dem Vergleichsbeispiel 2 zeigt den Effekt der Begasung noch ausgeprägter. Es wird deutlich, daß das System bei Begasung einen Temperaturabfall besser toleriert: die für die Verarbeitungseigenschaften äußerst wichtige Zellstruktur bleibt erhalten.

Die gemäß den Beispielen 1 und 2 erhaltenen Schaumperlen lassen sich nach bekannten Methoden problemlos zu Formkörpern mit sehr guter Qualität verarbeiten.

## Patentansprüche

1. Verfahren zur Herstellung von Polyolefin-Schaumpartikeln mittels Dispersionsschäumung,
dadurch gekennzeichnet,
daß beim Ausfahren des Reaktorinhalts, der im wesentlichen aus Polyolefinteilchen, einem flüssigen Dispersionsmittel und ggf. einem flüchtigen Treibmittel besteht, in einen Niederdruckraum der Reaktorinhalt in die Dispersion hinein so begast wird, daß durch die Düse ein Dreiphasengemisch aus Dispersionsmittel, Polymerpartikeln und Gas austritt,
ausgenommen ein Verfahren zur Herstellung von Schaumperlen aus Polymeren, das dadurch gekennzeichnet ist,
a) daß Polymerteilchen und ein Dispersionsmittel kontinuierlich einer schlanken, druckbetriebenen, nicht gerührten Stoffaustauschsäule zugeführt und in dieser unter Druck einer Wärmebehandlung ausgesetzt werden, wonach die Dispersion in einen Niederdruckraum ausgespritzt und dabei entspannt wird, und
b) daß in die Stoffaustauschsäule von unten ein Stützgas eingedüst wird.

2. Verfahren gemäß Anspruch 1,
dadurch gekennzeichnet,
daß das verwendete Gas in der Nähe des Reaktorbodens eingeleitet wird.

3. Verfahren gemäß Anspruch 2,
dadurch gekennzeichnet,
daß das Gas unterhalb des Rührers eingeleitet wird.

4. Verfahren gemäß Anspruch 1,
dadurch gekennzeichnet,
daß die Begasung vor der Düse oder in die Düse hinein vorgenommen wird.

5. Verfahren gemäß Anspruch 1,
dadurch gekennzeichnet,
daß das Gas durch den Rührer eingeleitet wird.

6. Verfahren gemäß einem der Ansprüche 1 bis 5,
dadurch gekennzeichnet,
daß das Gas ein anorganischer oder organischer Stoff ist, der unter Normalbedingungen gasförmig ist.

7. Verfahren gemäß einem der Ansprüche 1 bis 5,
dadurch gekennzeichnet,
daß als Gas der Dampf des verwendeten Treibmittels benutzt wird.

8. Verfahren gemäß Anspruch 7,
dadurch gekennzeichnet,
daß das Treibmittel als Dampf oder in flüssiger Form nachdosiert wird, wobei das eingeleitete Treibmittel gegebenenfalls vorgeheizt wird.

9. Verfahren gemäß einem der Ansprüche 1 bis 8,
dadurch gekennzeichnet,
daß als Polyolefin ein Ethylen-Propylen-Randomcopolymeres mit 1 bis 15 Gew.-% Ethylen eingesetzt wird.

## Claims

1. A process for producing polyolefin foam particles by means of dispersion foaming, characterized in that during discharge of the reactor contents, which consist essentially of polyolefin particles, a liquid dispersion medium and, if desired, a volatile blowing agent, into a low-pressure space, the reactor contents have gas introduced into the dispersion in such a way that a three-phase mixture of dispersion medium, polymer particles and gas exits through the nozzle,
except for a process for producing foam beads of polymers which is characterized in that
a) polymer particles and a dispersion medium are continuously fed to a slender, pressure-operated, unstirred mass-transfer column and are here subjected under pressure to heat treatment, after which the dispersion is sprayed out into a low-pressure space and is thus depressurized, and
b) a supporting gas is injected from below into the mass-transfer column.

2. A process according to claim 1, characterized in that the gas used is introduced in the vicinity of the bottom of the reactor.

3. A process according to claim 2, characterized in that the gas is introduced below the stirrer.

4. A process according to claim 1, characterized in that the gas introduction is carried out before the nozzle or into the nozzle.

5. A process according to claim 1, characterized in that the gas is introduced through the stirrer.

6. A process according to any one of claims 1 to 5, characterized in that the gas is an inorganic or organic material which is gaseous at STP.

7. A process according to any one of claims 1 to 5, characterized in that the gas utilized is the vapour of the blowing agent used.

8. A process according to claim 7, characterized in that further amounts of the blowing agent are metered in as vapour or in liquid form, with the blowing agent introduced being preheated if desired.

9. A process according to any one of claims 1 to 8, characterized in that an ethylene-propylene random copolymer containing from 1 to 15% by weight of ethylene is used as polyolefin.

## Revendications

1. Procédé pour fabriquer des particules de mousse de polyoléfine par moussage en dispersion, caractérisé en ce que, quand on envoie dans une chambre sous basse pression le contenu du réacteur, qui pour l'essentiel est constitué de particules de polyoléfine, d'un dispersant liquide et éventuellement d'un agent porogène volatil, un gaz est introduit dans le contenu du réacteur, dans la dispersion, de telle sorte qu'un mélange triphasique, constitué du dispersant, de particules polymères et du gaz, sorte par la buse,
à l'exception d'un procédé pour fabriquer des perles de mousse en polymères, caractérisé en ce que
a) des particules polymères et un dispersant sont, en continu, envoyés à une colonne d'échange de matière, non soumise à agitation, exploitée sous pression, allongée, et, dans cette dernière, sont soumis sous pression à un traitement thermique, après lequel la dispersion est projetée dans une chambre sous basse pression, et y est détendue, et
b) on injecte dans la colonne d'échange de matière, par le bas, un gaz d'appui.

2. Procédé selon la revendication 1, caractérisé en ce que le gaz utilisé est introduit au voisinage du fond du réacteur.

3. Procédé selon la revendication 2, caractérisé en ce que le gaz est introduit en-dessous de l'agitateur.

4. Procédé selon la revendication 1, caractérisé en ce que l'injection du gaz est effectuée en amont de la buse, ou dans la buse.

5. Procédé selon la revendication 1, caractérisé en ce que le gaz est introduit par l'intermédiaire de l'agitateur.

6. Procédé selon l'une des revendications 1 à 5, caractérisé en ce que le gaz est une substance organique ou minérale, qui est gazeuse dans les conditions normales.

7. Procédé selon l'une des revendications 1 à 5, caractérisé en ce qu'on utilise comme gaz la vapeur de l'agent porogène utilisé.

8. Procédé selon la revendication 7, caractérisé en ce que l'agent porogène est encore introduit sous forme de vapeur ou sous forme liquide, l'agent porogène introduit ayant éventuellement été préchauffé.

9. Procédé selon l'une des revendications 1 à 8, caractérisé en ce qu'on utilise comme polyoléfine un copolymère statistique éthylène-propylène ayant de 1 à 15 % en poids d'éthylène.
